# DEMANDE DE BREVET EUROPEEN

(11) **EP 1 264 847 A1**
(43) Date de publication de la demande: **11.12.2002**
(21) Numéro de dépôt: 01202161.4
(22) Date de dépôt: 06.06.2001
(51) Int. Cl.: C08F 10/00, C08F 4/70

(54) **Procédé pour la polymérisation des alpha-oléfines**

(71) Demandeur: SOLVAY POLYOLEFINS EUROPE - BELGIUM (Société Anonyme), 1050 Bruxelles (BE)
(72) Inventeur: Francois, Philippe, 1490 Court-Saint-Etienne-Faux (BE); Radhakrishnan, Karunakaran, 33600 Pessac (FR); Cramail, Henri, 33350 Sainte Terre (FR); Deffieux, Alain, 33000 Bordeaux (FR)
(74) Mandataire: Smith, Julian Philip Howard

(57) **Abrégé**

Procédé de polymérisation des alpha-oléfines dans lequel on met en contact, dans des conditions polymérisantes, au moins une alpha-oléfine avec un système catalytique comprenant
(a) au moins un complexe catalytique à base d'un métal de transition (M) des groupes 6 à 12 du Tableau Périodique,
(b) au moins un trialkylaluminium, représenté par la formule générale AlR₃ dans laquelle chaque R représente de manière indépendante, un groupe alkyle contenant de 1 à 12 atomes de carbone, et
(c) au moins un composé organoaluminium répondant à la formule générale R"ₙAlY₃₋ₙ dans laquelle R" représente un groupe alkyle contenant de 1 à 12 atomes de carbone, 0<n<3, Y représente un groupement de formule -GR^{a} ou un groupe de formule générale -G'(R^{b})ₚ(R^{c})₂₋ₚ dans lesquelles :
   - G représente un élément du groupe 16,
   - G' représente un élément du groupe 15,
   - R^{a} représente un groupe alkyle halogéné, un groupe aromatique hydrocarboné ou hétérohydrocarboné, éventuellement halogéné, un groupe alcényle ou un groupe répondant à la formule -B(R^{d})ₘ (OAlR^{e}₂)₂₋ₘ dans laquelle Rd représente un groupe hydrocarboné, R^{e} représente un groupe alkyle contenant de 1 à 12 atomes de carbone, et 0≤m≤2,
   - R^{b} représente un groupe alkyle, éventuellement halogéné, un groupe aromatique hydrocarboné ou hétérohydrocarboné, éventuellement halogéné, un groupe alcényle ou un groupe répondant à la formule Al(R^{f})₂ dans laquelle R^{f} représente un groupe alkyle contenant de 1 à 12 atomes de carbone,
   - R^{c} représente un atome d'hydrogène, un groupe alkyle, éventuellement halogéné, un groupe aromatique hydrocarboné ou hétérohydrocarboné, éventuellement halogéné, un groupe alcényle ou un groupe répondant à la formule Al(R^{h})₂ dans laquelle R^{h} représente un groupe alkyle contenant de 1 à 12 atomes de carbone, et
   - 0≤p≤2.

## Description

La présente invention concerne un procédé pour la polymérisation des alpha-oléfines.

Il est connu de polymériser les alpha-oléfines au moyen de systèmes catalytiques comprenant un complexe d'un métal de transition avec un ligand bi- ou tridentate, et un aluminoxane. La demande de brevet WO 98/27124 décrit un procédé de polymérisation de l'éthylène au moyen d'un système catalytique comprenant un complexe catalytique à base de fer ou de cobalt avec des pyridinebis-(imines) et du méthylaluminoxane. L'utilisation d'un aluminoxane conduit à des activités élevées. Toutefois, les aluminoxanes se présentent sous forme d'oligomères collants et sont difficiles à manipuler et à synthétisèr. En outre, les aluminoxanes commercialement disponibles ont une pureté très variable et sont relativement coûteux et instables.

Il est également connu de polymériser les alpha-oléfines au moyen de systèmes catalytiques comprenant de tels complexes et un trialkylaluminium. La demande de brevet EP 1054022 ainsi que Kumar et al. (Macromol. Chem. Phys., 2000, 201 (13), 1513) décrivent la polymérisation de l'éthylène à l'aide des catalyseurs à base de fer ayant des ligands de type bis-(imino)pyridine ou à base de nickel ayant des ligands de type di-imine en présence d'un trialkylaluminium. De tels systèmes catalytiques présentent une activité modérée, plus particulièrement à des températures de polymérisation supérieures à la température ambiante.

On a maintenant trouvé un procédé de polymérisation des alpha-oléfines au moyen d'un système catalytique à base d'un catalyseur comprenant un complexe d'un métal des groupes 6 à 12 qui ne nécessite pas l'utilisation d'aluminoxanes, et qui ne présente pas les inconvénients précités.

A cet effet, la présente invention concerne un procédé de polymérisation des alpha-oléfines dans lequel on met en contact, dans des conditions polymérisantes, au moins une alpha-oléfine avec un système catalytique comprenant
(a) au moins un complexe catalytique à base d'un métal (M) des groupes 6 à 12 du Tableau Périodique,
(b) au moins un trialkylaluminium répondant à la formule générale AlR₃ dans laquelle chaque R représente, de manière indépendante, un groupe alkyle contenant de 1 à 12 atomes de carbone, et
(c) au moins un composé organoaluminium répondant à la formule générale R"ₙAlY₃₋ₙ dans laquelle R" représente un groupe alkyle contenant de 1 à 12 atomes de carbone, 0<n<3, Y représente un groupe de formule générale -GR^{a} ou un groupe de formule générale -G'(R^{b})ₚ(R^{c})₂₋ₚ dans lesquelles :
   - G représente un élément du groupe 16,
   - G' représente un élément du groupe 15,
   - R^{a} représente un groupe alkyle halogéné, un groupe aromatique hydrocarboné ou hétérohydrocarboné, éventuellement halogéné, un groupe alcényle ou un groupe répondant à la formule -B(R^{d})ₘ (OAlR^{e}₂)₂₋ₘ dans laquelle R^{d} représente un groupe hydrocarboné, R^{e} représente un groupe alkyle contenant de 1 à 12 atomes de carbone, 0≤m≤2,
   - R^{b} représente un groupe alkyle, éventuellement halogéné, un groupe aromatique hydrocarboné ou hétérohydrocarboné, éventuellement halogéné, un groupe alcényle ou un groupe répondant à la formule Al(R^{f})₂ dans laquelle R^{f} représente un groupe alkyle contenant de 1 à 12 atomes de carbone,
   - R^{c} représente un atome d'hydrogène, un groupe alkyle, éventuellement halogéné, un groupe aromatique hydrocarboné ou hétérohydrocarboné, éventuellement halogéné, un groupe alcényle ou un groupe répondant à la formule Al(R^{h})₂ dans laquelle R^{h} représente un groupe alkyle contenant de 1 à 12 atomes de carbone, et
   - 0≤p≤2.

Toutes les références au Tableau Périodique des Eléments réfèrent à la version publiée dans CRC Handbook of Chemistry and Physics, 77th Edition, 1996/97; la notation utilisée est la nouvelle notation des groupes par IUPAC.

Dans la présente invention, on entend désigner par alpha-oléfines, les oléfines à insaturation terminale contenant de 2 à 20, de préférence de 2 à 8 atomes de carbone, telles que, notamment, l'éthylène, le propylène, le 1-butène, le 1-méthyl-pentène, le 1-hexène, le 1-octène. Il va de soi que, outre l'oléfine, un autre monomère copolymérisable avec l'oléfine peut être mis en oeuvre dans le procédé selon l'invention.

Les complexes catalytiques (a) mis en oeuvre dans le procédé selon l'invention sont en général choisis parmi ceux contenant au moins deux hétéroatomes et plus particulièrement parmi ceux représentés par la formule 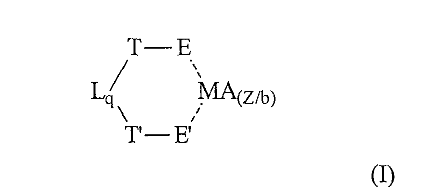 dans laquelle
- M est un métal des groupes 6 à 12 du Tableau Périodique,
- E et E' sont des groupements donneurs d'électrons contenant un atome du groupe 15; E et E' peuvent être différents ou identiques,
- L est un groupement donneur d'électrons contenant un atome du groupe 14 à 16 ou un noyau aromatique hydrocarboné; L peut être différent de ou identique à E et/ou E',
- T et T' représentent de façon indépendante, des ponts saturés ou insaturés contenant des éléments des groupes 14 à 16,
- chaque A représente, de manière indépendante, un atome ou un groupe d'atomes, lié au métal M de manière covalente ou ionique,
- Z est l'état d'oxydation de M,
- b est la valence de A,
- q est 1 ou 0.
   Les complexes catalytiques (a) préférés sont ceux répondant à la formule générale (I) dans laquelle le métal (M) est choisi parmi les métaux des groupes 6 à 10.
   Les complexes catalytiques (a) préférés sont ceux dans lesquels chaque A représente, de manière indépendante, un atome d'hydrogène, un atome d'halogène, un groupe hydrocarboné contenant de 1 à 35 atomes de carbone, un groupe alcoxy, un groupe amino, un groupe hydrocarboné phosphoré ou un groupe hydrocarboné contenant du silicium ayant de 1 à 20 atomes de carbone.
   Le complexe catalytique (a) mis en oeuvre dans la présente invention peut éventuellement être complexé par un groupement donneur d'électrons neutre.
   Les complexes catalytiques (a) selon l'invention sont en général choisis parmi les complexes à base de ligands di-imminiques bi- et tridentate. Selon une première forme d'exécution du procédé selon l'invention, le complexe catalytique (a) est choisi parmi ceux répondant à la formule générale (II). 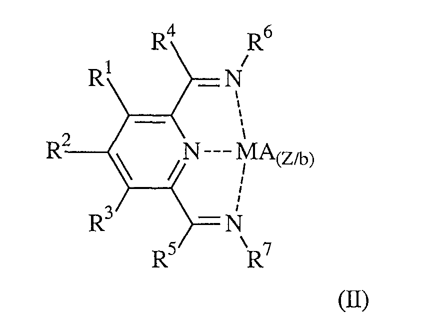
dans laquelle
- M, A, Z et b sont tels que définis pour la formule (I),
- R¹, R², R³, R⁴ et R⁵ représentent chacun, de manière indépendante, un atome d'hydrogène, un groupe hydrocarboné éventuellement substitué, un groupe hétérohydrocarboné éventuellement substitué ou un groupe fonctionnel inerte,
- R⁶ et R⁷ représentent chacun, de manière indépendante, un groupe aryle, éventuellement substitué.

Par groupe fonctionnel inerte, on entend désigner dans le cadre de la présente invention un atome ou un groupe d'atomes qui n'interfère pas dans les conditions du procédé selon la présente invention, et qui ne coordonne pas avec le métal de transition M. A titre d'exemples de groupes fonctionnels inertes, on peut citer les atomes d'halogène et les éthers de formule -OQ dans laquelle Q est un groupe hydrocarboné, éventuellement substitué. Les complexes catalytiques préférés selon cette première forme d'exécution du procédé sont ceux représentés par la formule (II) dans laquelle R⁶ est un groupe aryle répondant à la formule générale 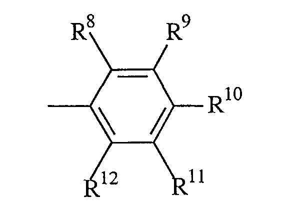 et R⁷ est un groupe aryle répondant à la formule générale 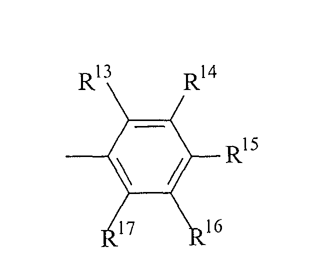 dans lesquelles
- R⁸ et R¹³ représentent chacun, de manière indépendante, un groupe hydrocarboné éventuellement substitué, un groupe hétérohydrocarboné éventuellement substitué ou un groupe fonctionnel inerte,
- R⁹, R¹⁰, R¹¹, R¹², R¹⁴, R¹⁵, R¹⁶ et R¹⁷ représentent chacun, de manière indépendante, un atome d'hydrogène, un groupe hydrocarboné éventuellement substitué, un groupe hétérohydrocarboné éventuellement substitué ou un groupe fonctionnel inerte,
- les groupes R⁸, R⁹, R¹⁰, R¹¹, R¹², R¹³, R¹⁴, R¹⁵, R¹⁶ et R¹⁷ qui sont adjacents pouvant être reliés l'un à l'autre de manière à former un cycle.

De tels complexes catalytiques ont été décrits par exemple dans la demande de brevet WO 98/27124.

Les complexes catalytiques (a) particulièrement préférés selon cette première forme d'exécution du procédé selon l'invention sont ceux à base de métaux (M) des groupes 6 à 9, et plus particulièrement ceux dans lesquels le métal (M) est le fer, le chrome ou le cobalt. Avantageusement, A représente un atome d'halogène, plus particulièrement un atome de chlore.

De bons résultats ont été obtenus avec des complexes catalytiques (a) répondant à la formule (II) dans laquelle
- M est un atome de Fe,
- A est un atome de Cl,
- b est égal à 1,
- Z est égal à 2,
- R¹, R² et R³ sont des atomes d'hydrogène,
- R⁴ et R⁵ sont chacun, de manière indépendante, un atome d'hydrogène ou un groupe alkyle comprenant de 1 à 6 atomes de carbone,
- R⁶ est un groupe aryle de formule 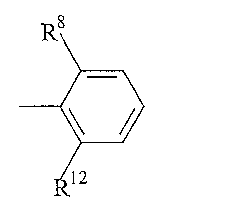
R⁷ est un groupe aryle de formule 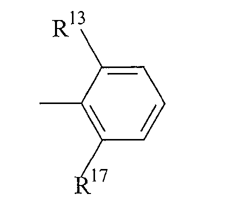 dans lesquelles R⁸ et R¹³ sont un groupe alkyle comprenant au plus 4 atomes de carbone, et R¹² et R¹⁷ sont un atome d'hydrogène ou un groupe alkyle comprenant au plus 4 atomes de carbone.

Selon une deuxième forme d'exécution du procédé selon l'invention, le complexe catalytique (a) est choisi parmi ceux répondant à la formule générale (III) 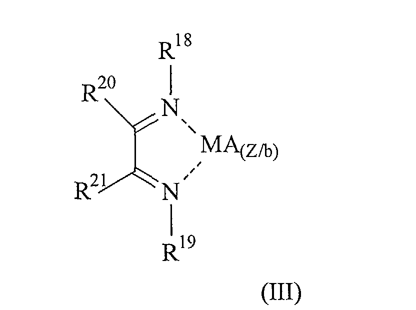 dans laquelle
- M, A, Z et b sont tels que définis pour la formule (I)
- R¹⁸ et R¹⁹ représentent, de manière indépendante, un groupe hydrocarboné comprenant au moins 3 atomes de carbone tel que l'atome de carbone lié à l'azote soit en outre lié à au moins deux autres atomes de carbone,
- R²⁰ et R²¹ représentent, de manière indépendante, un atome d'hydrogène ou un groupe hydrocarboné, éventuellement substitué, les deux groupes R²⁰ et R²¹ pouvant être reliés entre eux pour former un cycle.

Les complexes catalytiques (a) préférés selon cette deuxième forme d'exécution du procédé selon l'invention sont ceux dans lesquels
- M représente un métal des groupes 8 à 10 du Tableau Périodique,
- chaque A représente de manière indépendante un atome d'hydrogène, un atome d'halogène, un groupe hydrocarboné contenant de 1 à 35 atomes de carbone, un groupe alcoxy, un groupe amino, un groupe hydrocarboné phosphoré ou un groupe hydrocarboné contenant du silicium ayant de 1 à 20 atomes de carbone.

Les complexes catalytiques (a) particulièrement préférés selon cette deuxième forme d'exécution sont tels que
- M est le Ni ou le Pd,
- A est un atome d'halogène ou un groupe hydrocarboné de 1 à 10 atomes de carbone,
- R¹⁸ et R¹⁹ sont chacun, de manière indépendante, un groupe aryle, éventuellement substitué contenant de 6 à 30 atomes de carbone.
- R²⁰ et R²¹ sont chacun, de manière indépendante un groupe hydrocarboné contenant de 1 à 30 atomes de carbone reliés entre eux pour former un cycle.

Il va de soi que dans le procédé selon l'invention plusieurs complexes catalytiques tels que décrits ci-avant peuvent être mis en oeuvre ensemble.

Les trialkylaluminiums (b) de formule AlR₃ mis en oeuvre dans le procédé selon l'invention sont de préférence choisis parmi ceux dans lesquels R est un groupe alkyle contenant de 1 à 6 atomes de carbone, plus particulièrement ceux dans lesquels R est un groupe alkyle contenant de 1 à 4 atomes de carbone, tels que notamment le triméthylaluminium (TMA), le triéthylaluminium et le tri-isobutylaluminium (TIBAL), et leurs mélanges. Le TMA et le TIBAL sont particulièrement préférés.

Les composés organoaluminium (c) de formule générale R"ₙAlY₃₋ₙ mis en oeuvre dans le procédé selon l'invention sont de préférence choisis parmi ceux dans lesquels R" est un groupe alkyle contenant de 1 à 6 atomes de carbone, plus particulièrement ceux dans lesquels R" est un groupe alkyle contenant de 1 à 4 atomes de carbone.

Les composés organoaluminium (c) mis en oeuvre dans le procédé selon l'invention sont avantageusement ceux dans lesquels 1<n ≤ 2, et plus particulièrement ceux dans lesquels n est égal à 2.

Parmi les composés organoaluminium (c) dans lesquels Y est un groupe de formule -GR^{a} répondant dès lors à la formule R"ₙAl(GR^{a})₃₋ₙ, ceux dans lesquels G est un atome d'oxygène et R^{a} est un groupe aryle contenant de 6 à 20 atomes de carbone, éventuellement halogéné, un groupe alkyle halogéné contenant de 1 à 4 atomes de carbone, un groupe alcényle contenant de 2 à 6 atomes de carbone ou un groupe contenant du bore répondant à la formule générale -B(R^{d})(OAlR^{e}₂) dans laquelle R^{d} est un groupe aryle, et R^{e} est un groupe alkyle identique à R" sont particulièrement préférés. A titre d'exemples de groupes -GR^{a} particulièrement préférés, on peut citer C₆F₅O-, C₆H₅O-, 2,6-di(tertio butyl)C₆H₃O-, CF₃CH₂O-, (CF₃)₃CO-, CH₂=CH-(CH₂)₂-O-, CH₂=CH-CH₂-O- et -OB(C₆H₅)(OAlR^{e}₂) avec R^{e} représentant un groupe alkyle contenant de 1 à 4 atomes de carbone.

Les composés organoaluminium (c) dans lesquels Y est un groupe de formule -G'(R^{b})₂ répondant dès lors à la formule R"ₙAl[G'(R^{b})₂]₃₋ₙ, ceux dans lesquels G' est un atome d'azote et R^{b} représente un groupe aryle comprenant de 6 à 12 atomes de carbone sont préférés.

Les composés organoaluminium (c) mis en oeuvre dans le procédé selon l'invention peuvent être obtenus par la réaction d'un trialkylaluminium répondant à la formule générale AlR"₃ dans laquelle R" est défini comme auparavant, avec un composé de formule générale YH. Les composés organoaluminium (c) mis en oeuvre dans le procédé selon l'invention répondant à la formule générale R"ₙAl[(G-B(R^{d})ₘ (OAlR^{e}₂)₂₋ₘ]₃₋ₙ peuvent être obtenus par la réaction d'un trialkylaluminium avec un composé de bore répondant à la formule générale B(R^{d})ₘ(OH)₂₋ₘ(GH); le rapport molaire du trialkylaluminium au composé de bore pour effectuer cette réaction est généralement égal à (3-m) :1.

Le composé organoaluminium (c) mis en oeuvre dans le procédé selon l'invention peut être préparé avant sa mise en oeuvre dans le procédé de polymérisation. En alternative, le composé (c) peut être préparé in situ en faisant réagir le réactif approprié et le(s) trialkylaluminium(s) dans le réacteur de polymérisation.

La quantité de trialkylaluminium (b) mise en oeuvre dans le procédé selon l'invention est en général telle que le rapport atomique de l'aluminium provenant du trialkylaluminium (b) au métal de transition (M) provenant du complexe catalytique (a) est de 1 à 20000. De préférence ce rapport est d'au moins 10 plus particulièrement d'au moins 20. On obtient de bons résultats lorsque ce rapport est d'au moins 50. Le plus souvent, le rapport atomique de l'aluminium provenant du trialkylaluminium (b) au métal de transition (M) provenant du complexe catalytique (a) est d'au plus 15000, et plus particulièrement d'au plus 10000. Des résultats particulièrement bons sont obtenus lorsque ce rapport est de 100 à 5000.

La quantité de composé organoaluminium (c) mise en oeuvre dans le procédé selon l'invention est en général telle que le rapport atomique de l'aluminium provenant du composé organoaluminium (c) au métal de transition (M) provenant du complexe catalytique (a) est de 1 à 20000. De préférence ce rapport est d'au moins 10, plus particulièrement d'au moins 20. On obtient de bons résultats lorsque ce rapport est d'au moins 50. Le plus souvent, le rapport atomique de l'aluminium provenant du trialkylaluminium (b) au métal de transition (M) provenant du complexe catalytique (a) est d'au plus 15000, et plus particulièrement d'au plus 10000. Des résultats particulièrement bons sont obtenus lorsque ce rapport est de 100 à 5000.

Les quantités de trialkylaluminium (b) et de composé organoaluminium (c) mises en oeuvre dans le procédé selon l'invention sont en général telles que le rapport atomique de l'aluminium total, c'est-à-dire provenant du trialkylaluminium (b) et du composé organoaluminium (c), au métal de transition (M) provenant du complexe catalytique (a) est de 2 à 20000. De préférence ce rapport est d'au moins 10, plus particulièrement d'au moins 30. On obtient de bons résultats lorsque ce rapport est d'au moins 50. Le plus souvent, le rapport atomique de l'aluminium total au métal de transition (M) provenant du complexe catalytique (a) est d'au plus 15000, et plus particulièrement d'au plus 10000. Des résultats particulièrement bons sont obtenus lorsque ce rapport est de 200 à 10000.

Les quantités de trialkylaluminium (b) et de composé organoaluminium (c) mises en oeuvre dans le procédé selon l'invention sont en général telles que le rapport molaire du trialkylaluminium (b) au composé organoaluminium (c) est de 100 :1 à 1 :100, de préférence de 50 :1 à 1 :50. Les rapports molaires (b)/(c) de 10 :1 à 1 :10 sont très particulièrement préférés.

Dans le procédé selon l'invention, le trialkylaluminium (b) est généralement mis en contact avec l'alpha-oléfine dans le réacteur de polymérisation, puis le composé organoaluminium (c) y est ajouté et ensuite le complexe catalytique (a). En alternative, seulement une partie de l'alkylaluminium (b) est mise en contact avec l'alpha-oléfine dans le réacteur de polymérisation; l'autre partie est utilisée pour effectuer un prémélange avec le composé organoaluminium (c) et le complexe catalytique (a). Une autre variante consiste à introduire un prémélange contenant le complexe catalytique (a), la quantité totale du trialkylaluminium (b) et le composé organoaluminium (c) dans le réacteur en présence de l'alpha-oléfine.

Le procédé de polymérisation selon l'invention peut être réalisé en continu ou en discontinu, selon n'importe quel procédé connu, notamment en solution ou en suspension dans un diluant hydrocarboné, en suspension dans le monomère, ou un des monomères, maintenu à l'état liquide ou encore en phase gazeuse.

Optionnellement, le procédé de polymérisation selon l'invention peut être effectué en présence d'un ou plusieurs agents de réglage de la masse moléculaire des polyoléfines tels que l'hydrogène. Le procédé selon l'invention peut également être effectué en ajoutant un ou plusieurs agents anti-croûtage et/ou un ou plusieurs agents capteurs de poison tels que les dérivés organiques de lithium, magnésium, zinc, aluminium ou étain.

La température à laquelle est effectué le procédé de polymérisation selon l'invention est généralement de -50 °C à + 300 °C, le plus souvent de -20 à 130 °C. La température de polymérisation est de préférence d'au moins 30 °C. De manière préférée, elle ne dépasse pas 115 °C.

La pression totale à laquelle est effectué le procédé selon l'invention est en général choisie entre 1 10⁵ et 100 10⁵ Pa, plus particulièrement entre 1 10⁵ et 55 10⁵ Pa.

Le procédé de polymérisation selon l'invention est avantageusement appliqué à la fabrication de polymères d'éthylène, et plus particulièrement, à la fabrication d'homo- et de copolymères de l'éthylène comprenant au moins 90 moles % d'unités dérivées de l'éthylène. Les copolymères préférés sont ceux de l'éthylène et d'une autre alpha-oléfine comprenant de 3 à 8 atomes de carbone. Particulièrement préférés sont les copolymères de l'éthylène et du 1-butène et/ou du 1-hexène. Dans ce cas, le procédé de polymérisation est de préférence réalisé en suspension dans un diluant hydrocarboné. Le diluant hydrocarboné est généralement choisi parmi les hydrocarbures aliphatiques contenant de 3 à 10 atomes de carbone. De préférence, le diluant est choisi parmi le propane, l'isobutane, l'hexane ou leurs mélanges.

Le procédé selon l'invention permet d'obtenir des polymères d'alphaoléfines avec des activités élevées, souvent même supérieures à celles obtenues en utilisant des aluminoxanes. Le procédé selon l'invention permet d'obtenir des polymères d'alpha-oléfines ayant des distributions des masses moléculaires plus étroites, avec absence d'une fraction de très basse masse moléculaire.

Les exemples suivants servent à illustrer l'invention. Les méthodes de mesure des grandeurs mentionnées dans les exemples, et la signification des symboles utilisés dans ces exemples sont explicitées ci-dessous.

Par Al total, on entend l'aluminium provenant du trialkylaluminium (b) et du composé organoaluminium (c).

Les masses moléculaires moyennes en poids (M_{w}) et en nombre (Mₙ) sont obtenues par chromatographie d'exclusion stérique à partir d'une solution de polymère dans le trichlorobenzène à 0,5 g/l, au moyen d'une colonne polystyrénique telle que la colonne WATERS STYRAGEL® HMW 6E commercialisée par Waters Co Ltd et sont exprimées en kilodaltons. La distribution des masses moléculaires (DPM) est caractérisée par le rapport M_{w}/Mₙ.

L'activité est la quantité de polymère obtenue, exprimée en kg par mole de métal de transition mis en oeuvre et par heure de polymérisation.

### Synthèses des composés organoaluminium(c)

### Synthèse de C₆F₅OAlMe₂(1)

Dans un réacteur de type Schlenk séché maintenu sous atmosphère inerte, on a introduit 0,276 g ( 1,5 mmole) de C₆F₅OH puis 5 ml de toluène sec et le mélange a été agité pendant 10 minutes. 0,75 ml d'une solution 2M de TMA dans le toluène ont été ajoutés via une canicule, suivi de 3,5 ml de toluène sec. Le mélange a été agité pendant 1 heure.

### Synthèse de (2,6-di^{t}BuC₆H₃O)Al(ⁱBu)₂ (2)

Dans un réacteur de type Schlenk séché, on a introduit sous atmosphère inerte, 0,6 g (3 mmole) de 2,6-di (tertio butyl) phénol et 3 ml de toluène sec, et on a agité pendant 10 minutes. 3 ml d'une solution 1M de TIBAL dans le toluène ont été ajoutés via la canicule, suivis de 2 ml de toluène sec. Le mélange a été agité pendant 12 heures.

### Synthèse de (Me₂AlO)₂BC₆H₅ (3)

Dans un réacteur de type Schlenk séché, on a introduit sous atmosphère inerte, 0,25 g (2,05 mmole) de C₆H₅B(OH)₂ et 5 ml de toluène sec, et on a agité pendant 10 minutes. 2 ml d'une solution 2M de TMA dans le toluène ont ensuite été ajoutés via une canicule, suivis de 3,5 ml de toluène sec. Le mélange a été agité pendant une heure.

### Synthèse de (C₆F₅O)₂AlMe (4)

On a répété les opérations de la synthèse de (1), mais en utilisant 0,552 g (3 mmole) de C₆F₅OH.

### Synthèse de (C₆F₅O)₃Al (5)

On a répété les opérations de la synthèse de (1), mais en utilisant 0,828 g (4,5 mmole) de C₆F₅OH.

### Synthèse de C₆F₅OAl(¹Bu)₂ (6)

On a répété les opérations de la synthèse de (1), mais en utilisant 1,5 ml d'une solution 1M de TIBAL dans le toluène.

### Synthèse de C₆H₅OAlMe₂ (7)

On a répété les opérations de la synthèse de (1), mais en utilisant le C₆H₅OH au lieu du C₆F₅OH.

### Synthèse de (CF₃)₃C-OAlMe₂ (8)

On a répété les opérations de la synthèse de (1), mais en utilisant le (CF₃)₃C-OH au lieu du C₆F₅OH.

### Synthèse de (C₆H₅)₂NAlMe₂ (9)

On a répété les opérations de la synthèse de (1), mais en utilisant le (C₆H₅)₂NH au lieu du C₆F₅OH.

### Synthèse de CH₂=CH-(CH₂)₂-O- Al(¹Bu)₂ (10)

On a répété les opérations de la synthèse de (2), mais en utilisant le CH₂=CH-(CH₂)₂-OH au lieu du 2,6-di (tertio butyl) phénol.

### Synthèse de CH₂=CH-CH₂-O- Al(ⁱBu)₂ (11)

On a répété les opérations de la synthèse de (10), mais en utilisant le CH₂=CH-CH₂-OH au lieu du CH₂=CH-(CH₂)₂-OH.

### Polymérisation

### Exemples 1 à 19

Dans un autoclave de 300 ml (500 ml dans les exemples 8, 9 et 10), préalablement conditionné sous azote, ont été ajoutés 100 ml de toluène (300 ml dans les exemples 8, 9 et 10; 30 ml dans l'exemple 14). L'autoclave a alors été porté à 30°C et tiré sous vide durant 5 minutes. On y a ajouté ensuite l'éthylène jusqu'à obtenir une pression de 1 10⁵ Pa. Le trialkylaluminium (b), puis le composé organoaluminium (c), en solution dans le toluène et préparé comme décrit ci-avant, ont été introduits dans le réacteur. Les natures et les quantités de trialkylaluminium (b) et de composé organoaluminium (c) utilisées sont indiquées dans le tableau 1. Dans les exemples 8 à 13 et 17 à 19, le composé organoaluminium (c) a été généré in situ dans le réacteur en mélangeant dans le réacteur de polymérisation les quantités adéquates du réactif approprié et de trialkylaluminium.
Le mélange réactionnel a ensuite été agité avant de démarrer la polymérisation par l'introduction de 0,8x10⁻³ mmole du complexe catalytique suivant

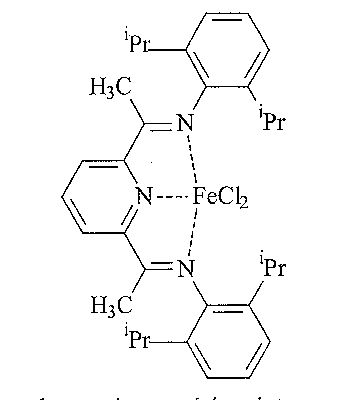

La température et la pression ont été maintenues constantes pendant une heure. La polymérisation a été arrêtée par dégazage de l'éthylène. Le contenu du réacteur a été vidé dans un becher contenant 100 ml de méthanol. Dans le réacteur, 300 ml de toluène ont été ajoutés et agités pendant 2 heures à 100 °C sous 5 10⁵ Pa d'azote afin d'y dissoudre le polymère restant dans le réacteur. Ce toluène a alors été ajouté au même becher. Un large excès d'acétone et 5 ml d'HCl concentré dilué dans 50 ml d'eau ont été ajoutés dans les 600 ml de toluène afin d'y précipiter le polymère et de détruire le catalyseur et le cocatalyseur présents. Le polymère précipité a été filtré et séché jusqu'à poids constant.

Les résultats obtenus se trouvent dans le tableau 1 ci-après.

### Exemple 1R (non conforme à l'invention)

Les opérations de l'exemple 2 ont été répétées sauf que l'ajout du composé organoaluminium (c) a été omis et qu'on a utilisé 0,75 mmole de TMA afin d'atteindre le même rapport atomique Al total/Fe.

Les résultats obtenus se trouvent dans le tableau 2 ci-après.

La comparaison de l'exemple 1R avec l'exemple 2 montre que le procédé selon l'invention mettant en oeuvre un système catalytique comprenant un composé organoaluminium (c) permet d'obtenir une activité catalytique plus élevée qu'un système catalytique ne comprenant pas de composé organoaluminium (c).

### Exemple 2R (non conforme à l'invention)

Les opérations de l'exemple 4 ont été répétées sauf que l'ajout du composé organoaluminium (c) a été omis et qu'on a utilisé 0,75 mmole de TIBAL afin d'atteindre le même rapport atomique Al total/Fe.

Les résultats obtenus se trouvent dans le tableau 2 ci-après.

La comparaison de l'exemple 4 avec l'exemple 2R montre que le procédé selon l'invention mettant en oeuvre un système catalytique comprenant un composé organoaluminium (c) permet d'obtenir une activité catalytique plus élevée qu'un système catalytique ne comprenant pas de composé organoaluminium (c).

### Exemple 3R (non conforme à l'invention)

Les opérations de l'exemple 2 ont été répétées sauf que le composé organoaluminium (C₆F₅O)₃Al et 30 ml de toluène au lieu de 100 ml ont été utilisés.

Les résultats obtenus se trouvent dans le tableau 2 ci-après.

La comparaison de l'exemple 3R avec l'exemple 2 montre que la mise en oeuvre d'un composé organoaluminium différent d'un composé organoaluminium (c) selon l'invention ne permet pas d'obtenir du polyéthylène.

### Exemple 4R (non conforme à l'invention)

Les opérations de l'exemple 2 ont été répétées sauf que l'ajout du TMA a été supprimé et que la quantité de C₆F₅OAlMe₂ était de 0,75 mmole afin d'atteindre le même rapport atomique Al total/Fe.

Les résultats obtenus se trouvent dans le tableau 2 ci-après et montrent que l'utilisation d'un composé organoaluminium (c) seul en absence de trialkylaluminium ne permet pas d'obtenir du polyéthylène.

### Exemple 5R (non conforme à l'invention)

Les opérations de l'exemple 5 ont été répétées mais sans ajout de TMA.

Les résultats obtenus se trouvent dans le tableau 2 ci-après et montrent que l'utilisation d'un composé organoaluminium (c) seul en absence de trialkylaluminium ne permet pas d'obtenir du polyéthylène.

### Exemple 6R (non conforme à l'invention)

Les opérations de l'exemple 7 ont été répétées mais sans ajout de TMA.

Les résultats obtenus se trouvent dans le tableau 2 ci-après et montrent que l'utilisation d'un composé organoaluminium (c) seul en absence de trialkylaluminium ne permet pas d'obtenir du polyéthylène.

### Exemple 7R (non conforme à l'invention)

Les opérations de l'exemple 2R ont été répétées sauf que du méthylaluminoxane (MAO) au lieu du TIBAL a été utilisé.

Les résultats obtenus se trouvent dans le tableau 2 ci-après.

### Exemple 8R (non conforme à l'invention)

Les opérations de l'exemple 18 ont été répétées sauf que l'ajout du TIBAL a été omis.

Les résultats obtenus se trouvent dans le tableau 2 ci-après.

### Exemples 20 à 22

Les opérations de l'exemple 14 ont été répétées, sauf que le complexe catalytique suivant a été utilisé. 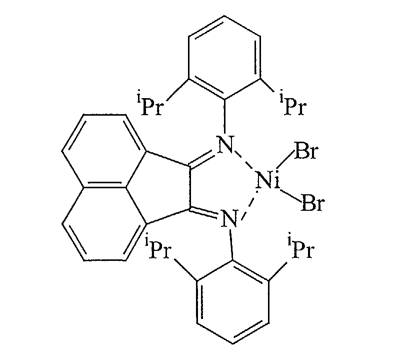 à raison de 0,8 x 10⁻³ mmole dans les exemples 21 et 22, et à raison de 1,6 x 10⁻³ mmole dans l'exemple 20, et que les quantités de TMA et de (C₆F₅O)₂AlMe ont été ajustées afin d'atteindre les rapports molaires Al/Ni qui se trouvent dans le tableau 3 ci-après.

Les résultats obtenus se trouvent dans le tableau 3 ci-après.

### Exemple 9R (non conforme à l'invention)

Les opérations de l'exemple 20 ont été répétées sauf que l'ajout de (C₆F₅O)₂AlMe a été omis.

Les résultats obtenus se trouvent dans le tableau 3 ci-après et montrent que le procédé selon l'invention mettant en oeuvre un système catalytique comprenant un composé organoaluminium (c) permet d'obtenir une activité catalytique plus élevée qu'un système catalytique ne comprenant pas de composé organoaluminium (c).

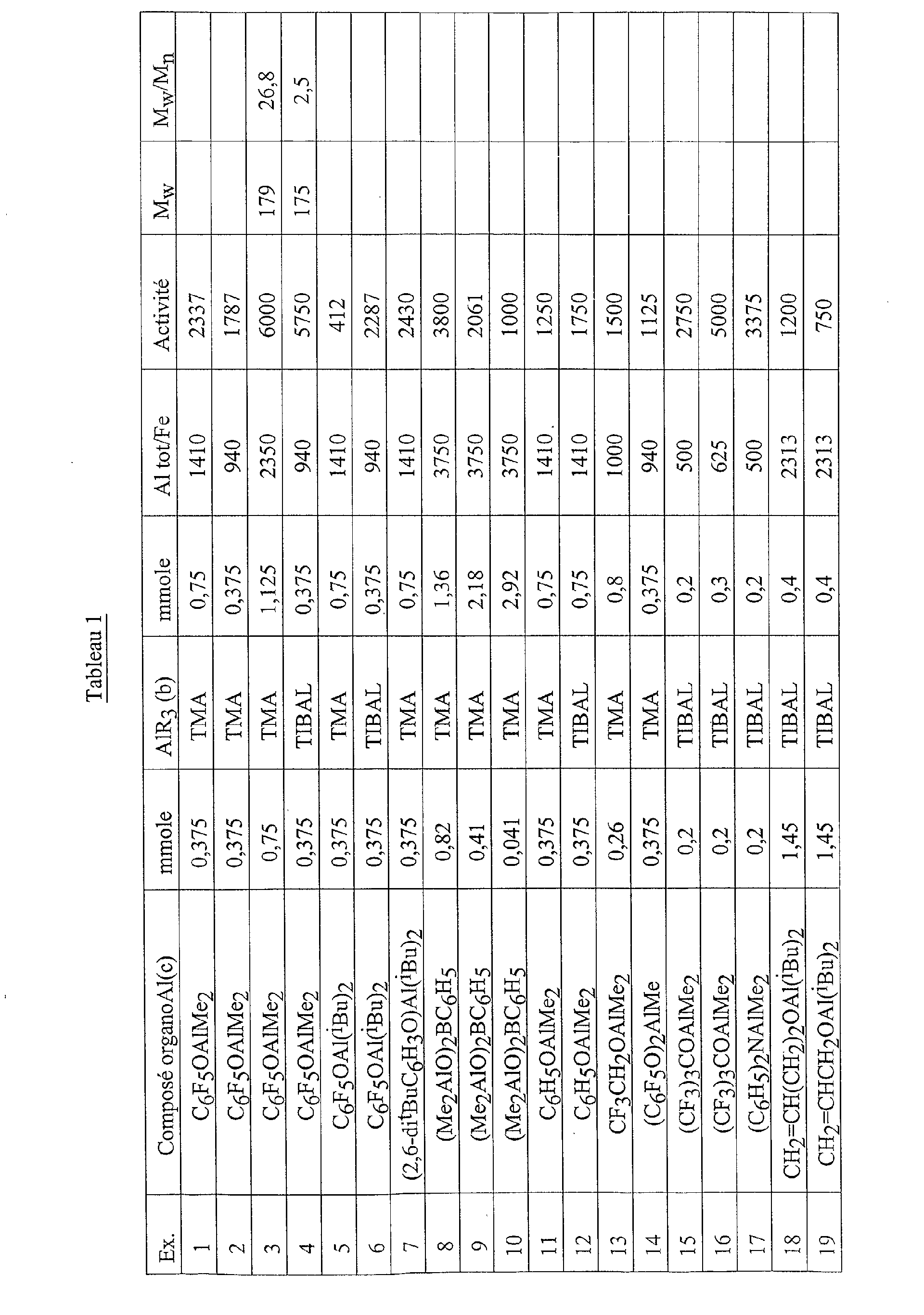

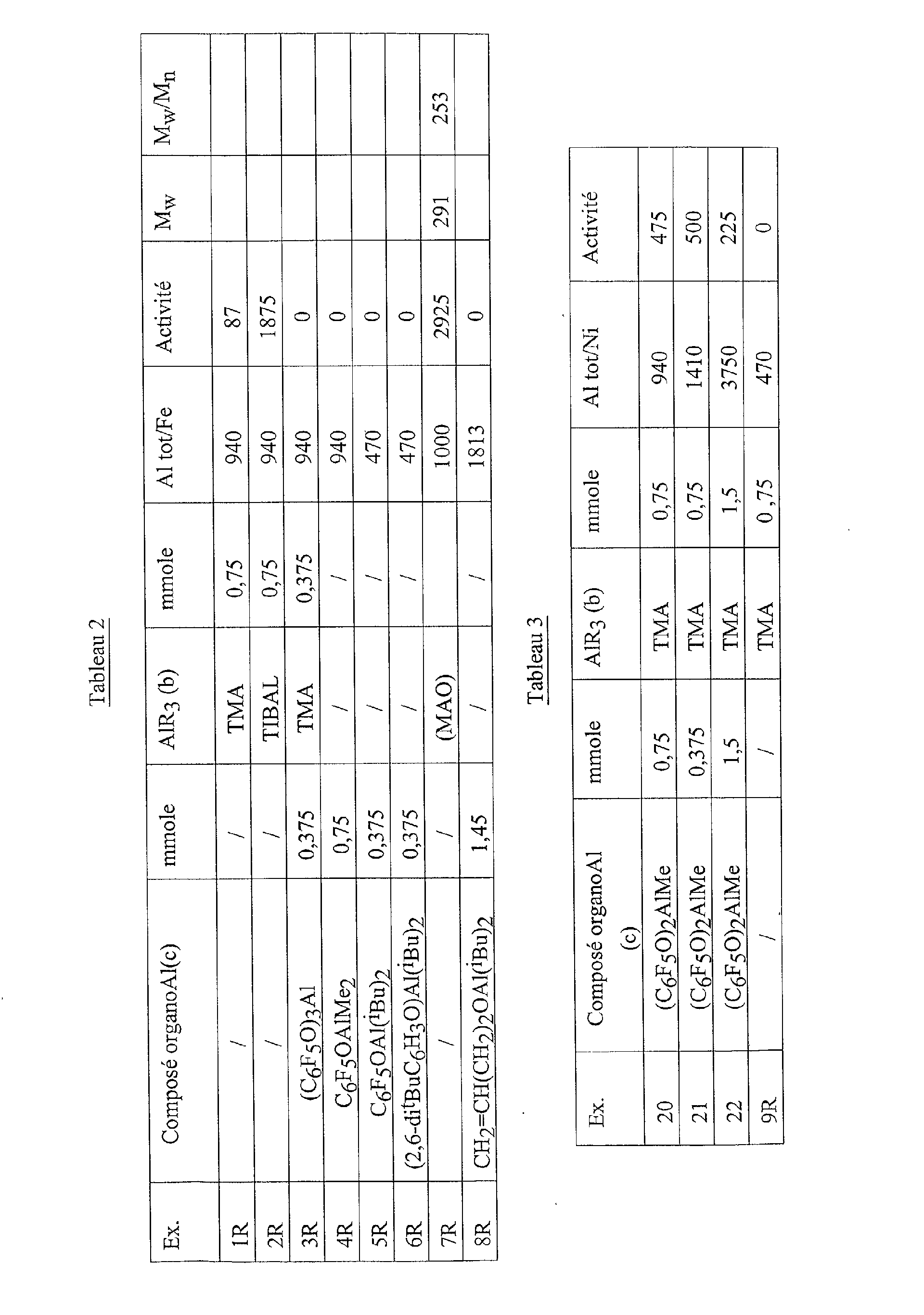

## Revendications

1. Procédé de polymérisation des alpha-oléfines dans lequel on met en contact, dans des conditions polymérisantes, au moins une alpha-oléfine avec un système catalytique comprenant
(a) au moins un complexe catalytique à base d'un métal (M) des groupes 6 à 12 du Tableau Périodique,
(b) au moins un trialkylaluminium répondant à la formule générale AlR₃ dans laquelle chaque R représente, de manière indépendante, un groupe alkyle contenant de 1 à 12 atomes de carbone, et
(c) au moins un composé organoaluminium répondant à la formule générale R"ₙAlY₃₋ₙ dans laquelle R" représente un groupe alkyle contenant de 1 à 12 atomes de carbone, 0<n<3, Y représente un groupe de formule générale -GR^{a} ou un groupe de formule générale -G'(R^{b})ₚ(R^{c})₂₋ₚ dans lesquelles :
- G représente un élément du groupe 16,
- G' représente un élément du groupe 15,
- R^{a} représente un groupe alkyle halogéné, un groupe aromatique hydrocarboné
ou hétérohydrocarboné, éventuellement halogéné, un groupe alcényle ou un groupe répondant à la formule -B(R^{d})ₘ (OAlR^{e}₂)₂₋ₘ dans laquelle Rd représente un groupe hydrocarboné, R^{e} représente un groupe alkyle contenant de 1 à 12 atomes de carbone, et 0≤m≤2,
- R^{b} représente un groupe alkyle, éventuellement halogéné, un groupe aromatique hydrocarboné ou hétérohydrocarboné, éventuellement halogéné, un groupe alcényle ou un groupe répondant à la formule Al(R^{f})₂ dans laquelle R^{f} représente un groupe alkyle contenant de 1 à 12 atomes de carbone,
- R^{c} représente un atome d'hydrogène, un groupe alkyle, éventuellement halogéné, un groupe aromatique hydrocarboné ou hétérohydrocarboné, éventuellement halogéné, un groupe alcényle ou un groupe répondant à la formule Al(R^{h})₂ dans laquelle R^{h} représente un groupe alkyle contenant de 1 à 12 atomes de carbone, et
- 0≤p≤2.

2. Procédé selon la revendication 1, dans lequel le complexe catalytique (a) répond à la formule générale (II). 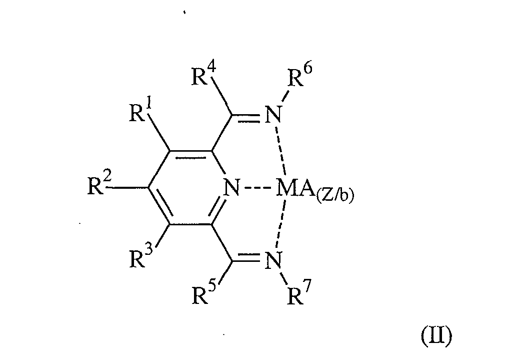 dans laquelle
- M est un métal des groupes 6 à 12 du Tableau Périodique,
- chaque A représente, de manière indépendante, un atome ou un groupe d'atomes, lié au métal M de manière covalente ou ionique,
- Z est l'état d'oxydation de M,
- b est la valence de A,
- R¹, R², R³, R⁴ et R⁵ représentent chacun, de manière indépendante, un atome d'hydrogène, un groupe hydrocarboné éventuellement substitué, un groupe hétérohydrocarboné éventuellement substitué ou un groupe fonctionnel inerte,
- R⁶ et R⁷ représentent chacun, de manière indépendante, un groupe aryle, éventuellement substitué.

3. Procédé selon la revendication 2, dans lequel le complexe catalytique
(a) répond à la formule (II) dans laquelle R⁶ est un groupe aryle de formule générale 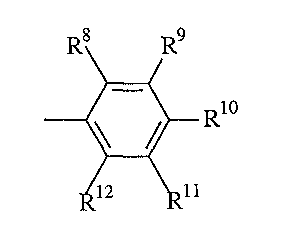 et R⁷ est un groupe aryle de formule générale 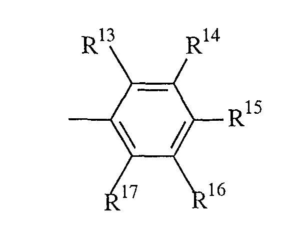 dans lesquelles
- R⁸ et R¹³ représentent chacun, de manière indépendante, un groupe hydrocarboné éventuellement substitué, un groupe hétérohydrocarboné éventuellement substitué ou un groupe fonctionnel inerte,
- R⁹, R¹⁰, R¹¹, R¹², R¹⁴, R¹⁵, R¹⁶ et R¹⁷ représentent chacun, de manière indépendante, un atome d'hydrogène ou un groupe hydrocarboné, éventuellement substitué ou un groupe fonctionnel inerte,
- les groupes R⁸, R⁹, R¹⁰, R¹¹, R¹², R¹³, R¹⁴, R¹⁵, R¹⁶ et R¹⁷ qui sont adjacents pouvant être reliés l'un à l'autre de manière à former un cycle.

4. Procédé selon la revendication 3, dans lequel le complexe catalytique (a) répond à la formule (II) dans laquelle
- M est un atome de Fe,
- A est un atome de Cl,
- b est égal à 1,
- Z est égal à 2,
- R¹, R² et R³ sont des atomes d'hydrogène,
- R⁴ et R⁵ sont chacun, de manière indépendante, un atome d'hydrogène ou un groupe alkyle comprenant de 1 à 6 atomes de carbone,
- R⁶ est un groupe aryle de formule, et 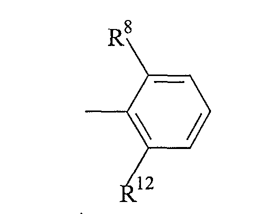
- R⁷ est un groupe aryle de formule 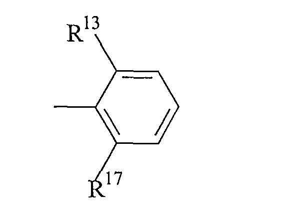
dans lesquelles R⁸ et R¹³ sont un groupe alkyle comprenant au plus 4 atomes de carbone,
et R¹² et R¹⁷ sont un atome d'hydrogène ou un groupe alkyle comprenant au plus 4 atomes de carbone.

5. Procédé selon la revendication 1 dans lequel le complexe catalytique (a) répond à la formule générale (III) 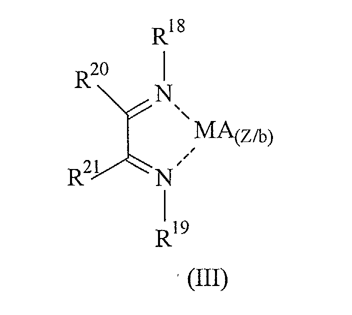 dans laquelle
- M représente un métal des groupes 6 à 12 du Tableau Périodique,
- chaque A représente, de manière indépendante, un atome ou un groupe d'atomes, lié au métal M de manière covalente ou ionique,
- Z est l'état d'oxydation de M,
- b est la valence de A,
- R¹⁸ et R¹⁹ représentent, de manière indépendante, un groupe hydrocarboné comprenant au moins 3 atomes de carbone tel que l'atome de carbone lié à l'azote soit en outre lié à au moins deux autres atomes de carbone,
- R²⁰ et R²¹ représentent, de manière indépendante, un atome d'hydrogène
ou un groupe hydrocarboné, éventuellement substitué, les deux groupes R²⁰ et R²¹ pouvant être reliés entre eux pour former un cycle.

6. Procédé selon la revendication 5, dans lequel le complexe catalytique répond à la formule générale (III) dans laquelle
- M est le Ni ou le Pd,
- A est un atome d'halogène ou un groupe hydrocarboné de 1 à 10 atomes de carbone,
- R¹⁸ et R¹⁹ sont chacun, de manière indépendante, un groupe aryle, éventuellement substitué contenant de 6 à 30 atomes de carbone.
- R²⁰ et R²¹ sont chacun, de manière indépendante un groupe hydrocarboné contenant de 1 à 30 atomes de carbone pouvant être reliés entre eux pour former un cycle.

7. Procédé selon l'une quelconque des revendications 1 à 6 dans lequel le composé organoaluminium (c) est choisi parmi les composés répondant à la formule générale R"ₙAlY₃₋ₙ dans laquelle R" est un groupe alkyle contenant de 1 à 6 atomes de carbone.

8. Procédé selon l'une quelconque des revendications 1 à 7 dans lequel le composé organoaluminium (c) est choisi parmi les composés répondant à la formule générale R"ₙAlY₃₋ₙ dans laquelle n est égal à 2.

9. Procédé selon l'une quelconque des revendications 1 à 8, dans lequel le composé oganoaluminium (c) est choisi parmi les composés répondant à la formule R"ₙAl(GR^{a})₃₋ₙ dans laquelle G est un atome d'oxygène et R^{a} est un groupe aryle contenant de 6 à 20 atomes de carbone, éventuellement halogéné, un groupe alkyle halogéné contenant de 1 à 4 atomes de carbone, un groupe alcényle contenant de 2 à 6 atomes de carbone
ou un groupe contenant du bore répondant à la formule générale B(R^{d})(OAlR^{e}₂) dans laquelle Rd est un groupe aryle et Re est un groupe alkyle identique à R".

10. Procédé selon la revendication 9, **caractérisé en ce que** -(GR^{a}) est un groupe choisi parmi C₆F₅O-, C₆H₅O-, 2,6-di(tertio butyl)C₆H₃O-, CF₃CH₂O-, (CF₃)₃CO-, CH₂=CH-(CH₂)₂-O-, CH₂=CH-CH₂-O- ou -OB(C₆H₅)(OAlR^{e}₂) avec Re représentant un groupe alkyle contenant de 1 à 4 atomes de carbone.

11. Procédé selon l'une quelconque des revendications 1 à 8, dans lequel le composé oganoaluminium (c) est choisi parmi les composés répondant à la formule R"ₙAl[G'(R^{b})₂]₃₋ₙ dans laquelle G' est un atome d'azote et R^{b} représente un groupe aryle comprenant de 6 à 12 atomes de carbone.

12. Procédé selon l'une quelconque des revendications 1 à 11, dans lequel le trialkylaluminium (b) est choisi parmi les composés de formule AlR₃ dans laquelle R est un groupe alkyle contenant de 1 à 6 atomes de carbone.

13. Procédé selon l'une quelconque des revendications 1 à 12, dans lequel le rapport atomique de l'aluminium provenant du trialkylaluminium (b) au métal de transition (M) provenant du complexe catalytique (a) est de 1 à 20000.

14. Procédé selon l'une quelconque des revendications 1 à 13, dans lequel le rapport atomique de l'aluminium provenant du composé organoaluminium (c) au métal de transition (M) provenant du complexe catalytique (a) est de 1 à 20000.

15. Procédé selon l'une quelconque des revendications 1 à 14, dans lequel le rapport atomique de l'aluminium provenant du trialkylaluminium (b) et du composé organoaluminium (c) au métal de transition (M) provenant du complexe catalytique (a) est de 2 à 20000.

16. Procédé selon l'une quelconque des revendications 1 à 15, dans lequel le rapport molaire du trialkylaluminium (b) au composé organoaluminium (c) est de 100:1 à 1:100.

17. Procédé selon l'une quelconque des revendications 1 à 16, dans lequel la polymérisation est effectuée à une température de -50 à 300 °C et sous une pression de 1 à 100 10⁵Pa.

18. Procédé selon l'une quelconque des revendications 1 à 17, appliqué à 1a fabrication de homo- ou de copolymères de l'éthylène comprenant au moins 90 moles % d'unités dérivées de l'éthylène.
